# EUROPÄISCHE PATENTSCHRIFT

(11) **EP 3 172 009 B1**
(45) Veröffentlichungstag und Bekanntmachung des Hinweises auf die Patenterteilung: **13.06.2018**
(21) Anmeldenummer: 15733439.2
(22) Anmeldetag: 01.07.2015
(51) Int. Cl.: F16H 53/02, F01L 1/047, B23P 11/02

(54) **VERFAHREN ZUM ZUSAMMENBAU EINER NOCKENWELLE**
METHOD OF ASSEMBLING A CAMSHAFT
PROCÉDÉ D'ASSEMBLAGE D'UN ARBRE À CAMES

(30) Priorität: 23.07.2014 DE 102014011067
(43) Veröffentlichungstag der Anmeldung: 31.05.2017
(73) Patentinhaber: ThyssenKrupp Presta TecCenter AG, 9492 Eschen (LI)
(72) Erfinder: CURLIC, Marko, 9486 Schaanwald (LI); PFITSCHER, Aaron, 6713 Ludesch (AT); SCHÄTZLE, Jörg, 88239 Wangen (DE)
(74) Vertreter: thyssenkrupp Intellectual Property GmbH
(86) Internationale Anmeldenummer: PCT/EP2015/064929
(87) Internationale Veröffentlichungsnummer: WO 2016/012206

(56) Entgegenhaltungen:
- WO-A1-92/02739
- WO-A1-2012/031770
- DE-A1-102008 053 723
- DE-A1-102012 025 442
- DE-A1-102012 206 499
- GB-A- 2 290 599
- JP-A- 2004 011 699

## Beschreibung

Die Erfindung betrifft eine Nockenwelle umfassend eine Tragwelle und ein Bauteil mit einer Durchgangsöffnung zur Aufnahme der Tragwelle. Weiterhin betrifft die Erfindung ein Verfahren zum Zusammenbau einer entsprechenden Nockenwelle und ein Verfahren zum Zusammenbau eines Motormoduls.

Es ist bekannt Nockenwellen herzustellen, indem Bauteile separat gefertigt werden und nachträglich mit einer Tragwelle verbunden werden. Beispielsweise offenbart die WO2012/051770 ein Montageverfahren, bei dem die Bauteile zunächst neben zugeordneten Aufweitungen der Tragwelle positioniert und einem nachfolgenden Schritt auf die Aufweitungen aufgepresst werden. Dies bedeutet, dass das Bauteil während des Einpressvorgangs in axialer Richtung um mindestens eine Strecke in axialer Richtung bewegt werden muss, die der axialen Breite des Bauteils entspricht. Dabei wird die axiale Richtung vorgegeben durch die spätere Rotationsachse der Nockenwelle. Gerade bei Bauteilen, die eine größere Ausdehnung in axialer Richtung haben, führt dies dazu, dass ein großer Montageweg während des Einpressvorgangs auftritt. Außerdem muss ein entsprechender axialer Bereich neben der Aufweitung auf der Tragwelle freigehalten werden, um das Bauteil vor dem Einpressvorgang dort zu positionieren. Insbesondere, wenn die Bauteile sehr dicht auf der Tragwelle befestigt werden sollen, kann ein derartiger Bereich nicht immer vorgehalten werden. Besondere Probleme treten auch auf, wenn die Nockenwelle in einer geschlossenen Lagergasse gefertigt werden soll, da in diesem Fall auch der Bauraum der Lageraufnahmen der Zylinderkopfhaube berücksichtigt werden müssen.

Ausgehend von diesen Problemen ist es die Aufgabe der vorliegenden Erfindung, Bauteile und Tragwelle derart zu gestalten, dass der für die Montage erforderliche axiale Bauraum verkleinert wird.

Diese Aufgabe wird gelöst durch eine Nockenwelle umfassend eine Tragwelle und ein Bauteil mit einer Durchgangsöffnung zur Aufnahme der Tragwelle. Hierbei weist die Tragwelle eine Mehrzahl von axial abwechselnd angeordneten Befestigungsbereichen und Positionierbereichen auf, wobei der Durchmesser der Tragwelle in den Befestigungsbereichen größer ist als der Durchmesser der Tragwelle in den Positionierbereichen. Die Tragwelle hat also in axialer Richtung einen zahnartigen Verlauf. Weiterhin weist die Durchgangsöffnung des Bauteils eine Mehrzahl von axial beabstandeten Befestigungsabschnitten auf, wobei zwischen zwei axial benachbarten Befestigungsabschnitten jeweils ein Positionierabschnitt angeordnet ist und der Durchmesser der Durchgangsöffnung in den Befestigungsabschnitten kleiner ist als der Durchmesser der Durchgangsöffnung in den Positionierabschnitten. Somit weist die Durchgangsöffnung des Bauteils einen zahnartigen Verlauf in axialer Richtung auf. Zudem ist der Durchmesser der Tragwelle in den Positionierbereichen kleiner als der Durchmesser der Durchgangsöffnung in den Befestigungsabschnitten und der Durchmesser der Tragwelle in den Befestigungsbereichen ist kleiner als der Durchmesser der Durchgangsöffnung in den Positionierabschnitten. Außerdem ist die jeweilige axiale Ausdehnung der Befestigungsbereiche, Positionierbereiche, Befestigungsabschnitte und Positionierabschnitte derart festgelegt, dass es eine erste axiale Position des Bauteils relativ zur Tragwelle gibt, bei der alle Befestigungsabschnitte des Bauteils vollständig in Positionierbereiche der Tragwelle fallen und alle Positionierabschnitte des Bauteils jeweils einen Befestigungsbereich der Tragwelle in axialer Richtung überdecken. Dabei fällt ein Befestigungsabschnitt in einen Positionierbereich, wenn die Projektion des Befestigungsabschnittes auf die Rotationsachse der Tragwelle innerhalb der Projektion des Positionierbereiches auf die Rotationsachse der Tragwelle liegt. Entsprechend überdeckt ein Positionierabschnitt einen Befestigungsbereich, wenn die Projektion des Befestigungsbereiches innerhalb der Projektion des Positionierabschnittes liegt.

Diese spezielle Wahl von axialen Ausdehnungen und Durchmesserrelationen führt dazu, dass die Tragwelle und das Bauteil in der ersten axialen Position ineinandergreifen in der Art von sich kämmenden Zähnen. Hierbei bilden die Befestigungsbereiche und Befestigungsabschnitte hervorstehende Zähne, die ineinandergreifen. Das Bauteil ist also nicht neben der endgültigen Montageposition angeordnet wie aus dem Stand der Technik bekannt, sondern lediglich um eine Zahnbreite versetzt. Folglich muss es auch nur um diese Zahnbreite während des Aufpressvorgangs bewegt werden. Der für die Montage erforderliche axiale Bauraum ist demnach deutlich reduziert.

Dadurch, dass der Durchmesser der Tragwelle in den Positionierbereichen kleiner als der Durchmesser der Durchgangsöffnung in den Befestigungsabschnitten und der Durchmesser der Tragwelle in den Befestigungsbereichen kleiner ist als der Durchmesser der Durchgangsöffnung in den Positionierabschnitten, ist das Bauteil auf der ersten axialen Position frei drehbar, so dass die Winkelposition des Bauteils relativ zur Tragwelle problemlos eingestellt werden kann.

Bei einer weitergebildeten Ausführungsform der Nockenwelle ist die axiale Ausdehnung der Befestigungsbereiche, Positionierbereiche, Befestigungsabschnitte und Positionierabschnitte derart, dass es eine zweite axiale Position des Bauteils relativ zur Tragwelle gibt, bei der die Befestigungsabschnitte in axialer Richtung zumindest teilweise mit Befestigungsbereichen überlappen, um das Bauteil auf der Tragwelle zu fixieren. Auf diese Weise kann durch eine einfache Bewegung des Bauteils relativ zur Tragwelle von der ersten axialen Position zur zweiten axialen Position ein Überlapp zwischen sich zuvor schräg gegenüberstehenden Zähnen herbeigeführt werden. Bei der Herstellung dieses Überlapps werden wird die Tragwelle in den Befestigungsbereichen plastisch verformt, so dass das Bauteil kraftschlüssig mit der Tragwelle verbunden ist. Alternativ kann auch das Bauteil in den Befestigungsabschnitten plastische verformt werden oder es kommt zu einer Verformung von Bauteil und Tragwelle in den gegenüberliegenden Befestigungsbereichen und Befestigungsabschnitten.

Die in dieser Anmeldung beschriebenen Durchmesserrelationen gelten, soweit nicht anderes genannt ist, für den Zustand, in dem Tragwelle und Bauteil die gleiche Temperatur aufweisen. Bei zwischenzeitlichen Montageschritten, die nachfolgend beschrieben werden, wird bewusst eine Temperaturdifferenz herbeigeführt. Während dieser Zwischenschritte können andere Durchmesserrelationen vorliegen.

Bei einer weitergebildeten Ausführungsform haben alle Befestigungsbereiche die gleiche axiale Ausdehnung und alle Positionierbereiche haben die gleiche axiale Ausdehnung. Damit ergibt sich eine periodische Zahnstruktur auf der Tragwelle, die besonders einfach herzustellen ist.

Bei einer weitergebildeten Ausführungsform haben alle Befestigungsabschnitte die gleiche axiale Ausdehnung und alle Positionierabschnitte haben die gleiche axiale Ausdehnung. Damit ergibt sich ein periodischee Zahnstruktur im Inneren der Durchgangsöffnung des Bauteils, die besonders einfach herzustellen ist.

In einer besonders bevorzugten Ausführungsvariante hat die zuvor beschriebene periodische Zahnstruktur der Tragwelle die gleiche Periode wie die periodische Zahnstruktur im Inneren der Durchgangsöffnung. Dies ist der Fall, wenn alle Positionierbereiche, Befestigungsbereiche, Positionierabschnitte, Befestigungsabschnitte die jeweilig gleiche axiale Ausdehnung haben und die Summe der axialen Ausdehnung eines Positionierbereiches und eines Befestigungsbereiches gleich der Summe der axialen Ausdehnung eines Positionierabschnittes und eines Befestigungsabschnittes ist. Diese gleiche Periode hat den Vorteil, dass die sich überlappenden Gebiete in der zweiten axialen Position ebenfalls eine regelmäßige, periodische Struktur (mit der gleichen Periode) haben. Da der Kraftübertrag zwischen Tragwelle und Bauteil über diese überlappenden Gebiete erfolgt, führt dieser Aufbau zu einem sehr gleichmäßigen Kraftübertrag.

Bei einer Weiterbildung der Nockenwelle haben alle Befestigungsbereiche eine erste axiale Ausdehnung, alle Positionierbereiche eine zweite axiale Ausdehnung, alle Befestigungsabschnitte eine dritte axiale Ausdehnung und alle Positionierabschnitte eine vierte axiale Ausdehnung. Dabei ist die erste axiale Ausdehnung kleiner als die vierte axiale Ausdehnung und die die dritte axiale Ausdehnung ist kleiner als die zweite axiale Ausdehnung. Hierbei handelt es sich um eine besonders einfache und regelmäßige Variante, die gewährleistet, dass in der ersten axialen Position das Bauteil frei drehbar ist.

Bei einer weiteren Ausgestaltung der erfindungsgemäßen Nocken weisen die Positionierbereiche Einführfasen auf. Dies bewirkt einen kontrollierteren Aufpressvorgang von der ersten auf die zweite axiale Position.

Die erfindungsgemäße Aufgabe wird ebenfalls gelöst durch ein Verfahren zum Zusammenbau einer Nockenwelle aus einer Tragwelle und einem zu verbindenden Bauteil, wobei das Bauteil eine Durchgangsöffnung zur Aufnahme der Tragwelle aufweist. Hierbei wird weist Verfahren die folgenden Verfahrensschritte auf:
a. es wird eine Tragwelle und ein Bauteil zur Verfügung gestellt, wobei
   i. die Tragwelle eine Mehrzahl von axial abwechselnd angeordneten Befestigungsbereichen und Positionierbereichen aufweist,
   ii. die Durchgangsöffnung (3) des Bauteils eine Mehrzahl von axial beabstandeten Befestigungsabschnitten aufweist,
   iii. zwischen zwei axial benachbarten Befestigungsabschnitten jeweils ein Positionierabschnitt angeordnet ist,
   iv. der Durchmesser der Tragwelle in den Positionierbereichen kleiner ist als der Durchmesser der Durchgangsöffnung in den Befestigungsabschnitten,
   v. der Durchmesser der Tragwelle in den Befestigungsbereichen kleiner ist als der Durchmesser der Durchgangsöffnung in den Positionierabschnitten,
   vi. der Durchmesser der Tragwelle in den Befestigungsbereichen größer ist als der Durchmesser der Tragwelle in den Positionierbereichen,
   vii. der Durchmesser der Durchgangsöffnung in den Befestigungsabschnitten kleiner ist als der Durchmesser der Durchgangsöffnung in den Positionierabschnitten ,
   viii. die axiale Ausdehnung der Befestigungsbereiche, Positionierbereiche, Befestigungsabschnitte und Positionierabschnitte derart ist, dass es eine erste axiale Position des Bauteils relativ zur Tragwelle gibt, bei der alle Befestigungsabschnitte des Bauteils vollständig in Positionierbereiche der Tragwelle fallen und alle Positionierabschnitte des Bauteils jeweils einen Befestigungsbereich der Tragwelle in axialer Richtung überdecken
   ix. und wobei die axiale Ausdehnung der Befestigungsbereiche, Positionierbereiche, Befestigungsabschnitte und Positionierabschnitte derart ist, dass es eine zweite axiale Position des Bauteils relativ zur Tragwelle gibt, bei der alle Befestigungsabschnitte in axialer Richtung zumindest teilweise mit Befestigungsbereichen überlappen, um das Bauteil auf der Tragwelle zu fixieren;
b. die Tragwelle wird gekühlt und/oder das Bauteil wird erwärmt, so dass die Tragwelle mit ihren Befestigungsbereichen durch die Durchgangsöffnung hindurch geschoben werden kann;
c. die Tragwelle wird durch die Durchgangsöffnung hindurch geschoben, so dass das Bauteil, die erste axiale Position einnimmt;
d. die Tragwelle wird erwärmt und/oder das Bauteil wird abgekühlt;
e. die Winkelposition des Bauteils relativ zur Tragwelle wird eingestellt, während sich das Bauteil an der ersten axialen Position befindet;
f. das Bauteil wird auf die zweite axiale Position aufgepresst.

Das Montageverfahren hat die gleichen Vorteile, die bereits zuvor im Zusammenhang mit der Tragwelle und dem Bauteil beschrieben wurden. Das Einstellen der Temperaturdifferenz in Schritt b) führt dazu, dass das Bauteil überhaupt erst die erste axiale Position einnehmen kann. Nachdem der Temperaturausgleich in Schritt d) erfolgt ist, ist das Bauteil bereits formschlüssig an der ersten axialen Position mit der Tragwelle verbunden, da die Tragwelle und das Bauteil nun ineinandergreifen in der Form von sich kämmenden Zähnen.

Bei einer weitergebildeten Form des Montageverfahrens zum Zusammenbau einer Nockenwelle aus einer Tragwelle und einem zu verbindenden Bauteil, wobei das Bauteil eine Durchgangsöffnung zur Aufnahme der Tragwelle aufweist, weist das Verfahren die folgenden Schritte auf:
a. es wird eine Tragwelle und ein Bauteil zur Verfügung gestellt, wobei
   i. die Tragwelle eine Mehrzahl von axial abwechselnd angeordneten Befestigungsbereichen und Positionierbereichen aufweist,
   ii. die Durchgangsöffnung (3) des Bauteils eine Mehrzahl von axial beabstandeten Befestigungsabschnitten aufweist,
   iii. zwischen zwei axial benachbarten Befestigungsabschnitten jeweils ein Positionierabschnitt angeordnet ist,
   iv. der Durchmesser der Tragwelle in den Positionierbereichen kleiner ist als der Durchmesser der Durchgangsöffnung in den Befestigungsabschnitten,
   v. der Durchmesser der Tragwelle in den Befestigungsbereichen kleiner ist als der Durchmesser der Durchgangsöffnung in den Positionierabschnitten,
   vi. der Durchmesser der Tragwelle in den Befestigungsbereichen größer ist als der Durchmesser der Tragwelle in den Positionierbereichen,
   vii. der Durchmesser der Durchgangsöffnung in den Befestigungsabschnitten kleiner ist als der Durchmesser der Durchgangsöffnung in den Positionierabschnitten ,
   viii. die axiale Ausdehnung der Befestigungsbereiche, Positionierbereiche, Befestigungsabschnitte und Positionierabschnitte derart ist, dass es eine erste axiale Position des Bauteils relativ zur Tragwelle gibt, bei der alle Befestigungsabschnitte des Bauteils vollständig in Positionierbereiche der Tragwelle fallen und alle Positionierabschnitte des Bauteils jeweils einen Befestigungsbereich der Tragwelle in axialer Richtung überdecken
   ix. und wobei die axiale Ausdehnung der Befestigungsbereiche, Positionierbereiche, Befestigungsabschnitte und Positionierabschnitte derart ist, dass es eine zweite axiale Position des Bauteils relativ zur Tragwelle gibt, bei der alle Befestigungsabschnitte in axialer Richtung zumindest teilweise mit Befestigungsbereichen überlappen, um das Bauteil auf der Tragwelle zu fixieren;
b. die Tragwelle wird gekühlt und/oder das Bauteil wird erwärmt, so dass die Tragwelle mit ihren Befestigungsbereichen durch die Durchgangsöffnung hindurch geschoben werden kann;
c. die Tragwelle wird durch die Durchgangsöffnung hindurch geschoben, so dass das Bauteil, die Vorposition einnimmt, in der die Befestigungsabschnitte in axialer Richtung teilweise mit den Befestigungsbereichen überlappen;
d. die Tragwelle wird erwärmt und/oder das Bauteil wird abgekühlt, wodurch das Bauteil in der Vorposition lösbar fixiert wird;
e. das Bauteil wird von der Vorposition gelöst und auf die erste axiale Position gebracht;
f. die Winkelposition des Bauteils relativ zur Tragwelle wird eingestellt, während sich das Bauteil an der ersten axialen Position befindet;
g. das Bauteil wird auf die zweite axiale Position aufgepresst.

Im Gegensatz zum zuvor beschriebenen Verfahren gibt es einen zusätzlichen Zwischenschritt, bei dem das Bauteil zunächst auf einer Vorposition lösbar fixiert wird. Die Tragwelle kann somit zwischen den Schritten d) und e) zusammen mit dem Bauteil bewegt werden, ohne dass sich die Winkelposition des Bauteils unkontrolliert verändert.

Die Erfindung betrifft ebenfalls ein Verfahren zum Zusammenbau eines Moduls für einen Kraftfahrzeugmotor aus mindestens einer Zylinderkopfhaube mit Lageraufnahmen für eine Tragwelle und einem mit der Tragwelle zu verbindenden Bauteil, wobei eine Nockenwelle aus der Tragwelle und dem Bauteil gemäß einem der zuvor geschriebenen gebaut wird. Zusätzlich wird in Schritt b) die Tragwelle gleichzeitig durch die Lageraufnahmen der Zylinderkopfhaube hindurch geschoben. Hierdurch wird der Bau der Nockenwelle auch in geschlossenen Lageraufnahmen ermöglicht.

Die erfindungsgemäße Aufgabe wird ebenfalls gelöst durch eine Nockenwelle umfassend eine Tragwelle und ein Bauteil mit einer Durchgangsöffnung zur Aufnahme der Tragwelle, wobei die Tragwelle einen ersten Durchmesserverlauf in axialer Richtung aufweist und die Durchgangsöffnung einen zweiten Durchmesserverlauf in axialer Richtung aufweist. Dabei sind der erste und der zweite Durchmesserverlauf derart korrespondierend zueinander gewählt, dass es eine erste axiale Position des Bauteils gibt, in der die Tragwelle und das Bauteil ineinandergreifen, so dass das Bauteil in axialer Richtung formschlüssig fixiert ist. Beispielsweise sind der erste und der zweite Durchmesserverlauf periodisch mit der gleichen Periode, wobei die Verläufe in der ersten axialen Position derart zueinander phasengleich sind, dass die Maxima des ersten Durchmesserverlaufs mit den Maxima des zweiten Durchmesserverlaufs zusammenfallen. Tragwelle und Bauteil greifen also ineinander in der Art von sich kämmenden Zähnen.

Insbesondere sind der erste Durchmessserverlauf und der zweite Durchmesserverlauf derart korrespondierend zueinander, dass das Bauteil an der ersten axialen Position frei drehbar zur Tragwelle ist. Dies hat den Vorteil, dass die Winkelposition des Bauteils relativ zur Tragwelle ohne großen Kraftaufwand eingestellt werden kann.

Bei einer weitergebildeten Ausführungsform der Nockenwelle gibt es eine zweite axiale Position des Bauteils, an der das Bauteil kraftschlüssig fixiert ist. Hierbei ist der erste Durchmesserverlauf und der zweite Durchmesserverlauf derart ausgebildet sind, dass das Bauteil nur durch eine plastische Verformung des ersten und/oder Durchmesserverlaufes von der ersten axialen Position auf die zweite axialen Position bewegt werden kann. Diese plastische Verformung hat den Vorteil, dass sie zu der kraftschlüssigen Fixierung des Bauteils an der zweiten axialen Position führt. Zurückkommend auf das obige Beispiel mit periodischen Durchmesserverläufen würde in der zweiten axialen Position ein Phasenversatz vorliegen, so dass die Maxima des ersten Durchmesserverlaufs mit den Minima des zweiten Durchmesserverlaufs zusammenfallen.

Da die Amplituden jedoch derart gewählt ist, dass die Maxima des ersten Durchmesserverlaufs größer sind als die Minima des zweiten Durchmesserverlaufs, lässt sich diese Position nur erreichen, indem mindestens einer der beiden Durchmesserverläufe verformt wird.

Insbesondere unterscheidet sich die zweite axiale Position des Bauteils von der ersten axialen Position des Bauteils um weniger als die axiale Breite des Bauteils unterscheidet. Dies hat den Vorteil, dass nur ein geringer Montageweg erforderlich ist.

Im Folgenden wird die Erfindung anhand von schematischen, das Prinzip der Erfindung darstellenden Zeichnungen näher erläutert. Im Einzelnen zeigen:
- Fig. 1: ein Bauteil in Form eines Nocken mit Befestigungsabschnitten und einem Positionierabschnitt;

- Fig. 2: eine Detailvergrößerung einer Tragwelle mit Befestigungsbereichen und Positionierbereichen;
- Fig. 3: einen Nocken auf einer Tragwelle in einer ersten axialen Position;
- Fig. 4: einen Nocken auf einer Tragwelle in einer zweiten axialen Position;
- Fig. 5: eine weitergebildete Ausbildung eines erfindungsgemäßen Bauteils;
- Fig. 6: einen Nocken auf einer Tragwellen in einer Vorposition;
- Fig. 7: einen Ausschnitt eines Moduls für einen Kraftfahrzeugmotor mit einen Nocken auf einer Tragwelle in einer ersten axialen Position;
- Fig. 8: einen Ausschnitt eines Moduls für einen Kraftfahrzeugmotor mit einem Nocken auf einer Tragwelle in einer zweiten axialen Position.

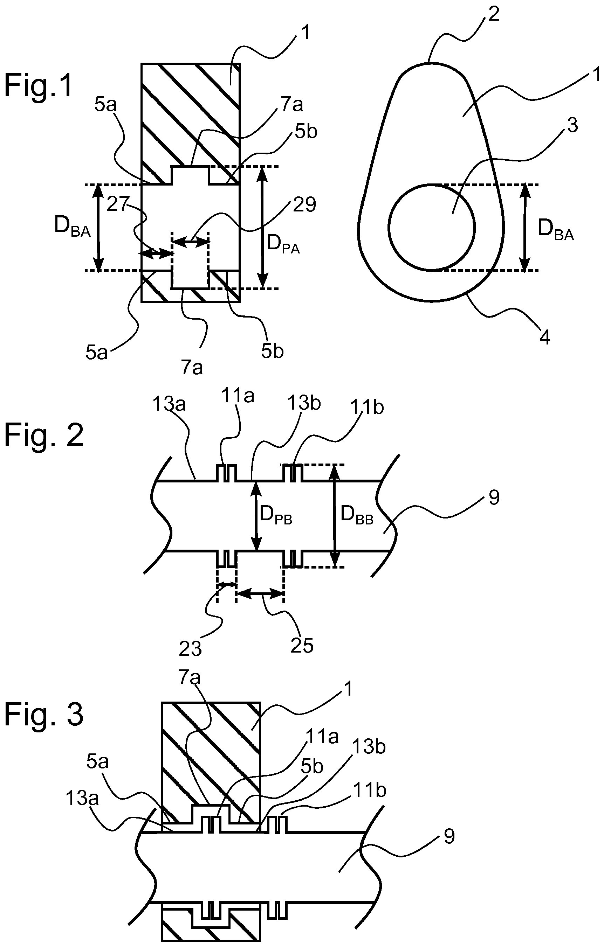

In Figur 1 ist ein Bauteil 1 mit einer Durchgangsöffnung 3 in zwei Schnitten dargestellt. Bei dem Bauteil handelt es sich um einen Nocken mit einer Nockenspitze 2 und einem Nockengrundkreis 4. Die Durchgangsöffnung 3 weist dabei zwei Befestigungsabschnitte 5a und 5b auf, die axial beabstandet sind. Dabei wird die axiale Richtung vorgegeben durch die spätere Rotationsachse der Nockenwelle. Zwischen den beiden axial benachbarten Befestigungsabschnitten 5a und 5b ist ein Positionierabschnitt 7a angeordnet. In den beiden Befestigungsabschnitten 5a und 5b hat die Durchgangsöffnung 3 einen Durchmesser DBA. Im dazwischenliegenden Positionierabschnitt 7a ist der Durchmesser DPA der Durchgangsöffnung 3 vergrößert. Es gilt also DPA>DBA. Sowohl im Positionierabschnitt 7a als auch in den beiden Befestigungsabschnitten 5a und 5b hat die Durchgangsöffnung 3 eine zylindrische Gestalt. Alternativ ist es auch möglich, dass die Befestigungsbereiche 5a und 5b durch separate Ausformungen gebildet werden, die über den Umfang der Durchgangsöffnung verteilt sind. Dies ist zum Beispiel der Fall, wenn in den Befestigungsbereichen 5a und 5b eine Innenverzahnung angeordnet ist. In diesen Fällen ist der Durchmesser DBA in den Befestigungsbereichen als der minimale Kreisdurchmesser zu verstehen. Bei einer Innenverzahnung entspricht der Durchmesser DBA also dem Abstand der gegenüberliegenden Zahnspitzen.

Anhand der Figur 1 ist ebenfalls erkennbar, dass die Befestigungsbereiche eine erste axiale Ausdehnung 23 haben und die Positionierbereiche eine zweite axiale Ausdehnung 25.

Figur 2 zeigt einen Ausschnitt aus einer Tragwelle 9. Dabei weist die Tragwelle 9 zwei Befestigungsbereiche 11a und 11b auf, sowie zwei Positionierbereiche 13a und 13b. In axialer Richtung wechseln sich die Befestigungsbereiche 11a, 11b und die Positionierbereiche 13a, 13b jeweils ab. Während der Durchmesser der Tragwelle 3 in den Positionierbereichen 13a und 13b einem Grunddurchmesser der Tragwelle 3 entspricht, ist der Durchmesser in den Befestigungsbereichen 11a und 11b aufgeweitet. Diese Aufweitung kann beispielsweise wie in Figur 2 schematisch dargestellt durch Rollierung hergestellt worden sein. Alternativ kann die Tragwelle auch ausgehend von einem größeren Durchmesser entsprechend abgeschliffen werden. Somit ist der Durchmesser DBB der Tragwelle 9 in den Befestigungsbereichen 11a, 11b größer als der Durchmesser DPB der Tragwelle 9 in den Positionierbereichen 13a, 13b.

Weiterhin erkennbar an Figur 2 ist, dass die Befestigungsabschnitte eine dritte axiale Ausdehnung 27 haben und die Positionierabschnitte eine vierte axiale Ausdehnung 29.

Figur 3 zeigt das Bauteil 1 in Relation zur Tragwelle 9. Somit ist erkennbar, dass der Durchmesser DPB der Tragwelle 9 in den Positionierbereichen 13a, 13b kleiner ist als der Durchmesser DBA der Durchgangsöffnung in den Befestigungsabschnitten 5a, 5b. Weiterhin wird deutlich, dass der Durchmesser DBB der Tragwelle in den Befestigungsbereichen 11a und 11b kleiner ist als der Durchmesser DPA der Durchgangsöffnung in dem Positionierabschnitt 7a. Bei der gezeigten Darstellung befindet sich das Bauteil 1 in einer ersten axialen Position relativ zur Tragwelle 9. Die axiale Ausdehnung der Befestigungsbereiche 11a und 11b, der Positionierbereiche 13a und 13b, der Befestigungsabschnitte 5a und 5b und des Positionierabschnittes 7a ist derart, dass bei der gezeigten ersten axialen Position des Bauteils 1 der Befestigungsabschnitt 5a vollständig in den Positionierbereich 13a fällt. Weiterhin fällt der Befestigungsabschnitt 5b vollständig in den Positionierbereich 13b. Darüber hinaus überdeckt der Positionierabschnitt 7a den Befestigungsbereich 11a. Die spezielle Wahl von axialen Ausdehnungen und Durchmesserrelationen führt dazu, dass die Tragwelle 9 und das Bauteil 1 ineinandergreifen in der Art von sich kämmenden Zähnen. Das Bauteil 1 ist in der ersten axialen Position frei drehbar relativ zur Tragwelle 9, so dass eine Winkelposition des Bauteils 1 eingestellt werden kann.

Anhand der in Figur 3 gezeigten Relation von Bauteil 1 zu Tragwelle 9 wird deutlich, dass die erste axiale Ausdehnung 23 kleiner ist als die vierte axiale Ausdehnung 29 und die dritte axiale Ausdehnung 27 kleiner ist als die zweite axiale Ausdehnung 25. Bei der gezeigten Ausführungsform handelt es sich um die einfachste regelmäßige Variante mit genau zwei Befestigungsbereichen und zwei Befestigungsabschnitten.

Die in Figur 3 dargestellte Konfiguration, bei der das Bauteil 1 die erste axiale Position einnimmt, wird hergestellt indem zunächst die Tragwelle 9 gekühlt wird und/oder das Bauteil 1 erwärmt wird. Aufgrund des Temperaturunterschiedes kommt es zu unterschiedlichen thermischen Verformungen, so dass die Tragwelle 9 mit ihren Befestigungsbereichen 11a und 11b durch die Durchgangsöffnung 3 des Bauteils 1 hindurch geschoben werden kann. In diesem Zustand ist der Durchmesser der Befestigungsabschnitte 5a und 5b also größer als der Durchmesser der Befestigungsbereiche 11a und 11b. Sobald die erste axiale Position des Bauteils 1 eingestellt wurde, wird ein Temperaturausgleich durchgeführt, bei dem die Tragwelle 9 erwärmt wird und/oder das Bauteil 1 abgekühlt wird, so dass der Durchmesser der Tragwelle 9 in den Befestigungsbereichen 11a, 11b größer ist als der Durchmesser der Durchgangsöffnung 3 des Bauteils 1 in den Befestigungsabschnitten 5a, 5b.

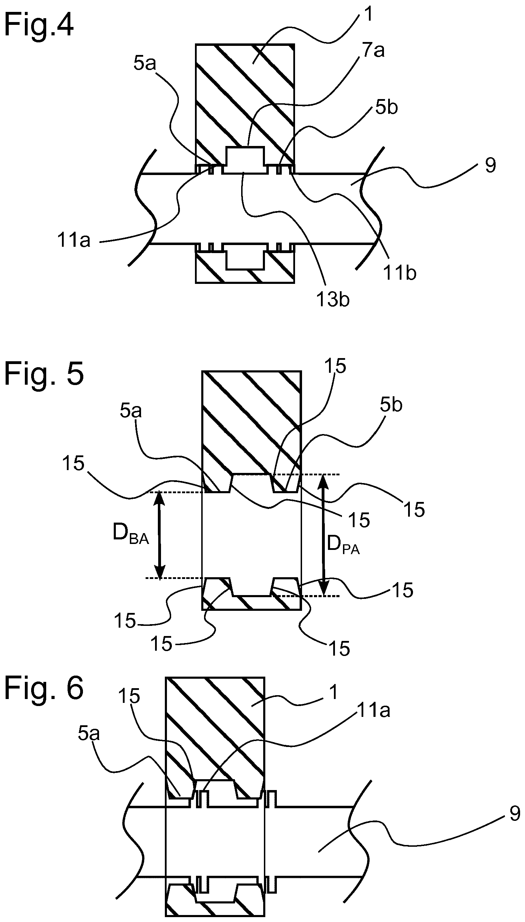

Ausgehend von der ersten axialen Position des Bauteils 1, die in Figur 3 dargestellt ist, wird das Bauteil 1 auf eine zweite axiale Position aufgepresst. Die zweite axiale Position ist in Figur 4 dargestellt. Beim Aufpressen auf die zweite axiale Position werden die Befestigungsbereiche 11a und 11b plastisch verformt, so dass das Bauteil 1 kraftschlüssig mit der Tragwelle 9 verbunden wird. Um dies zu erreichen ist die axiale Ausdehnung der Befestigungsbereiche 11a und 11b, der Positionierbereiche 13a und 13b, der Befestigungsabschnitte 5a und 5b sowie des Positionierabschnittes 7a derart, dass in der zweiten axialen Position die Befestigungsbereiche 11a und 11b mit den Befestigungsabschnitten 5a und 5b zumindest teilweise überlappen. Bei der Herstellung dieses Überlapps kommt zu der beschriebenen plastischen Verformung, die das Bauteil 1 auf der Tragwelle 9 kraftschlüssig fixiert.

Figur 5 zeigt eine weitergebildete Variante des Bauteils 1. Bei dieser Ausführungsform weist das Bauteil 1 an den Randbereichen der Positionierbereiche 5a und 5b Einführfasen 15 auf. Im Bereich der Einführfasen 15 hat die Durchgangsöffnung 3 einen trichterförmigen Verlauf zwischen einem größeren und einem kleineren Durchmesser. Dies bewirkt einen kontrollierteren Aufpressvorgang von der ersten auf die zweite axiale Position.

Figur 6 zeigt das Bauteil 1, das eine Vorposition einnimmt, in der die Befestigungsabschnitte 5a und 5b in axialer Richtung teilweise mit den Befestigungsbereichen 11a und 11b überlappen. Diese Konfiguration wird hergestellt indem zunächst die Tragwelle 9 gekühlt wird und/oder das Bauteil 1 erwärmt wird. Aufgrund des Temperaturunterschiedes kommt es zu unterschiedlichen thermischen Verformungen, so dass die Tragwelle 9 mit ihren Befestigungsbereichen 11a und 11b durch die Durchgangsöffnung 3 hindurch geschoben werden kann. In diesem Zustand ist der Durchmesser der Befestigungsabschnitte 5a und 5b also größer als der Durchmesser der Befestigungsbereiche 11a und 11b. Sobald die Vorposition des Bauteils 1 eingestellt wurde, wird ein Temperaturausgleich durchgeführt, bei dem die Tragwelle 9 erwärmt wird und/oder das Bauteil 1 abgekühlt wird, so dass der Durchmesser der Tragwelle 9 in den Befestigungsbereichen kleiner ist als der Durchmesser des Bauteils 1 in den Befestigungsabschnitten. Im Gegensatz zu der in Figur 3 gezeigten Konfiguration hat dieser zusätzliche Zwischenschritt den Vorteil, dass das Bauteil 1 nach dem Temperaturausgleich nicht sofort frei beweglich ist. Stattdessen ist das Bauteil 1 auf der Vorposition in definierter Winkelausrichtung lösbar fixiert. Die Tragwelle 1 kann somit zusammen mit dem Bauteil 1 bewegt werden, ohne dass sich die Winkelposition des Bauteils 1 unkontrolliert verändert. Ausgehend von diesem Zwischenschritt wird das Bauteil 1 von der Vorposition gelöst und in die erste axiale Position gebracht. Auf dieser Position wird die Winkelposition des Bauteils 1 relativ zur Tragwelle eingestellt und das Bauteil auf die zweite axiale Position aufgepresst.

Figur 6 zeigt das Bauteil 1 mit Einführfasen 15. Dies ist jedoch nicht zwingend für die Montagevariante mit Vorposition. Auch das in Figur 1 dargestellte Bauteil 1 ohne Einführfase kann entsprechend vorpositioniert werden.

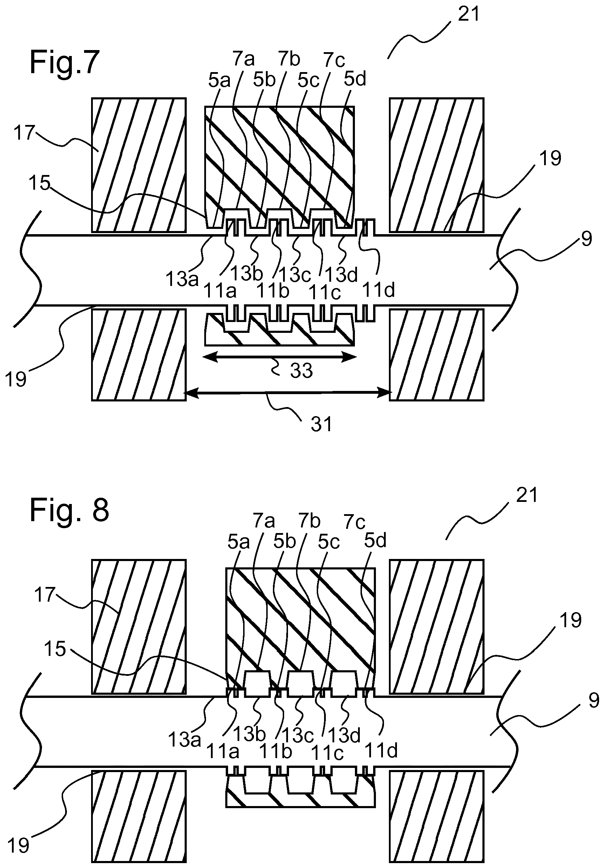

In Figur 7 ist ein Ausschnitt eines Moduls 21 für einen Kraftfahrzeugmotor gezeigt. Das Modul 21 umfasst eine Zylinderkopfhaube 17 mit Lageraufnahmen 19 für eine Tragwelle 9. Aus Figur 7 wird der Vorteil der Erfindung besonders deutlich. Bei bekannten Montageverfahren, wie beispielsweise in der WO2012/051770 gezeigt, werden die Bauteile zunächst neben den Aufweitungen der Tragwelle positioniert und einem nachfolgenden Schritt auf die Aufweitungen aufgepresst. Dies bedeutet, dass das Bauteil während des Einpressvorgangs in axialer Richtung um mindestens eine Strecke in axialer Richtung bewegt werden muss, die der axialen Breite des Bauteils entspricht. Wie vorliegend in Figur 7 gezeigt, gibt es jedoch Anwendungen, bei denen eine derartige Montage nicht möglich ist, da der axiale Bauraum nicht ausreichend ist, um das Bauteil neben der Aufweitung zu positionieren. Vorliegend ist beispielsweise der axiale Abstand 31 der beiden Lageraufnahmen 19 kleiner als die doppelte axiale Breite 33 des Bauteils 1, so dass das Bauteil 1 nicht neben den Befestigungsbereichen 11a, 11b, 11c, 11d positioniert werden kann. Stattdessen sind Tragwelle 9 und Bauteil 1 derart gestaltet, dass es eine ersten axiale Position des Bauteils 1 relativ zur Tragwelle 9 gibt, auf der das Bauteil 1 frei drehbar ist, die aber nicht vollständig neben den Befestigungsbereichen 11a, 11b, 11c und 11d liegt. Daher muss das Bauteil 1 beim Aufpressen um eine deutlich geringere Strecke in axiale Richtung bewegt werden, so dass die Montage auch bei Anwendungen mit geringem axialen Bauraum möglich wird. Die spezielle Gestaltung besteht bei der gezeigten Ausführungsform darin, dass die Tragwelle 9 jeweils vier axial abwechselnd angeordnete Befestigungsbereiche 11a, 11b, 11c, 11d und Positionierbereiche 13a, 13b, 13c, 13d aufweist. Weiterhin weist die Durchgangsöffnung vier axial beabstandete Befestigungsabschnitte 5a, 5b, 5c, 5d auf, zwischen denen jeweils ein Positionierabschnitt 7a, 7b, 7c angeordnet ist. Analog zu Figur 1 und 2 ist der Durchmesser DPB der Tragwelle 9 in den Positionierbereichen 13a-d kleiner als der Durchmesser DBA der Durchgangsöffnung 3 in den Befestigungsabschnitten 5a-d. Zusätzlich ist der Durchmesser DBB der Tragwelle 9 in den Befestigungsbereichen 11a-d kleiner als der Durchmesser DPA der Durchgangsöffnung 3 in den Positionierabschnitten 7a, 7b, 7c. Neben den Durchmesserrelationen sind die Befestigungsbereiche 11a-d, die Positionierbereiche 13a-d, die Befestigungsabschnitte 5a-d und die Positionierabschnitte 7a-c derart angeordnet und haben eine derartige axiale Ausdehnung, dass es eine erste axiale Position des Bauteils 1 gibt. Figur 7 zeigt eben diese erste axiale Position des Bauteils 1, bei der alle Befestigungsabschnitte 5a-d vollständig in Positionierbereiche 13a-d fallen und alle Positionierabschnitte 7a-c jeweils einen Befestigungsbereich 11a-d in axialer Richtung überdecken.

Analog zu Figur 1 und 2 gilt auch bei dieser Ausführungsform, dass der Durchmesser der Tragwelle 9 in den Befestigungsbereichen 11a-d größer ist als der Durchmesser der Tragwelle 9 in den Positionierbereichen 13a-d. Außerdem gilt auch hier, dass der Durchmesser der Durchgangsöffnung 3 in den Befestigungsabschnitten 5a-d kleiner ist als der Durchmesser der Durchgangsöffnung 3 in den Positionierabschnitten 7a-c.

Bei der in Figur 7 dargestellten Ausführungsform handelt es sich um eine besonders regelmäßige Variante mit insgesamt vier Befestigungsbereichen 11a-d und vier Befestigungsabschnitten 5a-d. In dieser Variante haben alle Befestigungsbereiche 11a-d die gleiche axiale Ausdehnung und alle Positionierbereiche 13a-d haben ebenfalls die gleiche axiale Ausdehnung. Weiterhin haben alle Befestigungsabschnitte 5a-d und alle Positionierabschnitte 7a-d jeweils die gleiche axiale Ausdehnung. Damit sich ergibt sich eine periodische Zahnstruktur auf der Tragwelle 9 und in Durchgangsöffnung 3 des Bauteils 1.
Weiterhin gilt bei dieser Ausführungsform, dass die Summe der axialen Ausdehnung eines Positionierbereiches 13a-d und eines Befestigungsbereiches 11a-d gleich der Summe der axialen Ausdehnung eines Positionierabschnittes 7a-c und eines Befestigungsabschnittes 5a-d ist. Dies bedeutet, dass die Außenkontur von Durchgangsöffnung 3 und Tragwelle 9 jeweils periodisch verläuft, wobei beide die gleiche Periode aufweisen. Diese gleiche Periode hat den Vorteil, dass die sich überlappenden Gebiete in der zweiten axialen Position ebenfalls eine regelmäßige, periodische Struktur (mit der gleichen Periode) haben. Dies wird nachfolgend an Figur 8 deutlich. Da der Kraftübertrag zwischen Tragwelle 9 und Bauteil über 1 diese überlappenden Gebiete erfolgt, führt dieser Aufbau zu einem sehr gleichmäßigen Kraftübertrag.

Die in Figur 7 dargestellte Konfiguration, bei der das Bauteil 1 die erste axiale Position einnimmt, wird hergestellt indem zunächst die Tragwelle 9 gekühlt wird oder das Bauteil 1 erwärmt wird. Aufgrund des Temperaturunterschiedes kommt es zu unterschiedlichen thermischen Verformungen, so dass die Tragwelle 9 mit ihren Befestigungsbereichen 11a und 11b durch die Durchgangsöffnung 3 und gleichzeitig durch die Lageraufnahmen 19 hindurch geschoben werden kann. In diesem Zustand ist der Durchmesser der Durchgangsöffnung in den Befestigungsabschnitten 5a und 5b also größer als der Durchmesser der Befestigungsbereiche 11a und 11b. Ebenso ist in diesem Zustand der Durchmesser der Lageraufnahmen 19 größer als der Durchmesser der Befestigungsbereiche 11a und 11b. Somit ist ein problemloses Einschieben der Tragwelle 9 möglich. Sobald die erste axiale Position des Bauteils 1 eingestellt wurde, wird ein Temperaturausgleich durchgeführt, bei dem die Tragwelle 9 erwärmt wird und/oder das Bauteil 1 abgekühlt wird, so dass der Durchmesser der Tragwelle 9 in den Befestigungsbereichen 11a-d größer ist als der Durchmesser der Durchgangsöffnung 3 des Bauteils 1 in den Befestigungsabschnitten 5a-d.

Nachdem die gewünschte Winkelposition des Bauteils 1 relativ zur Tragwelle 9 eingestellt wurde, während sich das Bauteil 1 an der, in Figur 7 gezeigten, ersten axialen Position befindet, wird das Bauteil auf die zweite axiale Position aufgepresst. Die zweite axiale Position ist in Figur 8 dargestellt. Beim Aufpressen auf die zweite axiale Position werden die Befestigungsbereiche 11a-d plastisch verformt, so dass das Bauteil 1 kraftschlüssig mit der Tragwelle 9 verbunden wird. Um dies zu erreichen ist die axiale Ausdehnung der Befestigungsbereiche 11a-d, der Positionierbereiche 13a-d, der Befestigungsabschnitte 5a-d sowie der Positionierabschnitte 7a-c derart, dass in der zweiten axialen Position die Befestigungsbereiche 11a-d mit den Befestigungsabschnitten 5a-d zumindest teilweise überlappen. Bei der Herstellung dieses Überlapps kommt zu der beschriebenen plastischen Verformung, die das Bauteil 1 auf der Tragwelle 9 kraftschlüssig fixiert.

## Patentansprüche

1. Nockenwelle umfassend eine Tragwelle (9) und ein Bauteil (1) mit einer Durchgangsöffnung (3) zur Aufnahme der Tragwelle, wobei
a. die Tragwelle (9) eine Mehrzahl von axial abwechselnd angeordneten Befestigungsbereichen (11a, 11b, 11c, 11d) und Positionierbereichen (13a, 13b, 13c, 13d) aufweist,
b. die Durchgangsöffnung (3) des Bauteils (1) (1) eine Mehrzahl von axial beabstandeten Befestigungsabschnitten (5a, 5b, 5c, 5d) aufweist,
c. zwischen zwei axial benachbarten Befestigungsabschnitten (5a, 5b, 5c, 5d) jeweils ein Positionierabschnitt (7a, 7b, 7c) angeordnet ist,
d. der Durchmesser der Tragwelle (9) in den Positionierbereichen (13a, 13b, 13c, 13d) kleiner ist als der Durchmesser der Durchgangsöffnung (3) in den Befestigungsabschnitten (5a, 5b, 5c, 5d),
e. der Durchmesser der Tragwelle (9) in den Befestigungsbereichen (11a, 11b, 11c, 11d) kleiner ist als der Durchmesser der Durchgangsöffnung (3) in den Positionierabschnitten (7a, 7b, 7c),
f. der Durchmesser der Tragwelle (9) in den Befestigungsbereichen (11a, 11b, 11c, 11d) größer ist als der Durchmesser der Tragwelle (9) in den Positionierbereichen (13a, 13b, 13c, 13d),
g. der Durchmesser der Durchgangsöffnung (3) in den Befestigungsabschnitten (5a, 5b, 5c, 5d) kleiner ist als der Durchmesser der Durchgangsöffnung (3) in den Positionierabschnitten (7a, 7b, 7c),
h. und wobei die axiale Ausdehnung der Befestigungsbereiche (11a, 11b, 11c, 11d), Positionierbereiche (13a, 13b, 13c, 13d), Befestigungsabschnitte (5a, 5b, 5c, 5d) und Positionierabschnitte (7a, 7b, 7c) derart ist, dass es eine erste axiale Position des Bauteils (1) relativ zur Tragwelle (9) gibt, bei der alle Befestigungsabschnitte (5a, 5b, 5c, 5d) des Bauteils (1) vollständig in Positionierbereiche (13a, 13b, 13c, 13d) der Tragwelle (9) fallen und alle Positionierabschnitte (7a, 7b, 7c) des Bauteils (1) jeweils einen Befestigungsbereich (11a, 11b, 11c, 11d) der Tragwelle (9) in axialer Richtung überdecken, **dadurch gekennzeichnet, dass**
alle Befestigungsbereiche (11a, 11b, 11c, 11d) eine erste axiale Ausdehnung (23) haben,
alle Positionierbereiche (13a, 13b, 13c, 13d) eine zweite axiale Ausdehnung (25) haben,
alle Befestigungsabschnitte (5a, 5b, 5c, 5d) eine dritte axiale Ausdehnung (27) haben,
alle Positionierabschnitte (7a, 7b, 7c) eine vierte axiale Ausdehnung (29) haben
und dass die erste axiale Ausdehnung (25) kleiner ist als die vierte axiale Ausdehnung (29)
und die die dritte axiale Ausdehnung (27) kleiner ist als die zweite axiale Ausdehnung (25).

2. Nockenwelle nach Anspruch 1,
**dadurch gekennzeichnet, dass**
die axiale Ausdehnung der Befestigungsbereiche (11a, 11b, 11c, 11d), Positionierbereiche (13a, 13b, 13c, 13d), Befestigungsabschnitte (5a, 5b, 5c, 5d) und Positionierabschnitte (7a, 7b, 7c) derart ist, dass es eine zweite axiale Position des Bauteils (1) relativ zur Tragwelle (9) gibt, bei der die Befestigungsabschnitte (5a, 5b, 5c, 5d) in axialer Richtung zumindest teilweise mit Befestigungsbereichen (11a, 11b, 11c, 11d) überlappen, um das Bauteil (1) auf der Tragwelle (9) zu fixieren.

3. Nockenwelle nach einem der Ansprüche 1-2,
**dadurch gekennzeichnet, dass**
alle Befestigungsbereiche (11a, 11b, 11c, 11d) die gleiche axiale Ausdehnung haben und alle Positionierbereiche (13a, 13b, 13c, 13d) die gleiche axiale Ausdehnung haben.

4. Nockenwelle nach einem der Ansprüche 1-3,
**dadurch gekennzeichnet, dass**
alle Befestigungsabschnitte (5a, 5b, 5c, 5d) die gleiche axiale Ausdehnung haben und alle Positionierabschnitte (7a, 7b, 7c) die gleiche axiale Ausdehnung haben.

5. Nockenwelle nach einem der Ansprüche 1-4,
**dadurch gekennzeichnet, dass**
alle Positionierbereiche (13a, 13b, 13c, 13d), Befestigungsbereiche (11a, 11b, 11c, 11d), Positionierabschnitte (7a, 7b, 7c), Befestigungsabschnitte (5a, 5b, 5c, 5d) die jeweilig gleich axiale Ausdehnung haben und die Summe der axialen Ausdehnung eines Positionierbereiches (13a, 13b, 13c, 13d) und eines Befestigungsbereiches (11a, 11b, 11c, 11d) gleich der Summe der axialen Ausdehnung eines Positionierabschnittes (7a, 7b, 7c) und eines Befestigungsabschnittes (5a, 5b, 5c, 5d) ist.

6. Nockenwelle nach einem der Ansprüche 1-5,
**dadurch gekennzeichnet, dass**
die Positionierbereiche (13a, 13b, 13c, 13d) Einführfasen (15) aufweisen.

7. Verfahren zum Zusammenbau einer Nockenwelle aus einer Tragwelle (9) und einem zu verbindenden Bauteil, wobei das Bauteil (1) eine Durchgangsöffnung (3) zur Aufnahme der Tragwelle (9) aufweist, **gekennzeichnet durch** die folgenden Verfahrensschritte:
a. es wird eine Tragwelle (9) und ein Bauteil (1) zur Verfügung gestellt, wobei
i. die Tragwelle (9) eine Mehrzahl von axial abwechselnd angeordneten Befestigungsbereichen (11a, 11b, 11c, 11d) und Positionierbereichen (13a, 13b, 13c, 13d) aufweist,
ii. die Durchgangsöffnung (3) des Bauteils (1) (1) eine Mehrzahl von axial beabstandeten Befestigungsabschnitten (5a, 5b, 5c, 5d) aufweist,
iii. zwischen zwei axial benachbarten Befestigungsabschnitten (5a, 5b, 5c, 5d) jeweils ein Positionierabschnitt (7a, 7b, 7c) angeordnet ist,
iv. der Durchmesser der Tragwelle (9) in den Positionierbereichen (13a, 13b, 13c, 13d) kleiner ist als der Durchmesser der Durchgangsöffnung (3) in den Befestigungsabschnitten (5a, 5b, 5c, 5d),
v. der Durchmesser der Tragwelle (9) in den Befestigungsbereichen (11a, 11b, 11c, 11d) kleiner ist als der Durchmesser der Durchgangsöffnung (3) in den Positionierabschnitten (7a, 7b, 7c),
vi. der Durchmesser der Tragwelle (9) in den Befestigungsbereichen (11a, 11b, 11c, 11d) größer ist als der Durchmesser der Tragwelle (9) in den Positionierbereichen (13a, 13b, 13c, 13d),
vii. der Durchmesser der Durchgangsöffnung (3) in den Befestigungsabschnitten (5a, 5b, 5c, 5d) kleiner ist als der Durchmesser der Durchgangsöffnung (3) in den Positionierabschnitten (7a, 7b, 7c),
viii. die axiale Ausdehnung der Befestigungsbereiche (11a, 11b, 11c, 11d), Positionierbereiche (13a, 13b, 13c, 13d), Befestigungsabschnitte (5a, 5b, 5c, 5d) und Positionierabschnitte (7a, 7b, 7c) derart ist, dass es eine erste axiale Position des Bauteils (1) relativ zur Tragwelle (9) gibt, bei der alle Befestigungsabschnitte (5a, 5b, 5c, 5d) des Bauteils (1) vollständig in Positionierbereiche (13a, 13b, 13c, 13d) der Tragwelle (9) fallen und alle Positionierabschnitte (7a, 7b, 7c) des Bauteils (1) jeweils einen Befestigungsbereich (11a, 11b, 11c, 11d) der Tragwelle (9) in axialer Richtung überdecken ix. und wobei die axiale Ausdehnung der Befestigungsbereiche (11a, 11b, 11c, 11d), Positionierbereiche (7a, 7b, 7c), Befestigungsabschnitte (5a, 5b, 5c, 5d) und Positionierabschnitte (7a, 7b, 7c) derart ist, dass es eine zweite axiale Position des Bauteils (1) relativ zur Tragwelle (9) gibt, bei der alle Befestigungsabschnitte (5a, 5b, 5c, 5d) in axialer Richtung zumindest teilweise mit Befestigungsbereichen (11a, 11b, 11c, 11d) überlappen, um das Bauteil (1) auf der Tragwelle (9) zu fixieren;
b. die Tragwelle (9) wird gekühlt und/oder das Bauteil (1) wird erwärmt, so dass die Tragwelle (9) mit ihren Befestigungsbereichen (11a, 11b, 11c, 11d) durch die Durchgangsöffnung (3) hindurch geschoben werden kann;
c. die Tragwelle (9) wird durch die Durchgangsöffnung (3) hindurch geschoben, so dass das Bauteil, die erste axiale Position einnimmt;
d. die Tragwelle (9) wird erwärmt und/oder das Bauteil (1) wird abgekühlt;
e. die Winkelposition des Bauteils (1) relativ zur Tragwelle (9) wird eingestellt, während sich das Bauteil (1) an der ersten axialen Position befindet;
f. das Bauteil (1) wird auf die zweite axiale Position aufgepresst.

8. Verfahren zum Zusammenbau einer Nockenwelle aus einer Tragwelle (9) und einem zu verbindenden Bauteil, wobei das Bauteil (1) eine Durchgangsöffnung (3) zur Aufnahme der Tragwelle (9) aufweist, **gekennzeichnet durch** die folgenden Verfahrensschritte:
a. es wird eine Tragwelle (9) und ein Bauteil (1) zur Verfügung gestellt
i. die Tragwelle (9) eine Mehrzahl von axial abwechselnd angeordneten Befestigungsbereichen (11a, 11b, 11c, 11d) und Positionierbereichen (13a, 13b, 13c, 13d) aufweist,
ii. die Durchgangsöffnung (3) des Bauteils (1) (1) eine Mehrzahl von axial beabstandeten Befestigungsabschnitten (5a, 5b, 5c, 5d) aufweist,
iii. zwischen zwei axial benachbarten Befestigungsabschnitten (5a, 5b, 5c, 5d) jeweils ein Positionierabschnitt (7a, 7b, 7c) angeordnet ist,
iv. der Durchmesser der Tragwelle (9) in den Positionierbereichen (13a, 13b, 13c, 13d) kleiner ist als der Durchmesser der Durchgangsöffnung (3) in den Befestigungsabschnitten (5a, 5b, 5c, 5d),
v. der Durchmesser der Tragwelle (9) in den Befestigungsbereichen (11a, 11b, 11c, 11d) kleiner ist als der Durchmesser der Durchgangsöffnung (3) in den Positionierabschnitten (7a, 7b, 7c),
vi. der Durchmesser der Tragwelle (9) in den Befestigungsbereichen (11a, 11b, 11c, 11d) größer ist als der Durchmesser der Tragwelle (9) in den Positionierbereichen (13a, 13b, 13c, 13d),
vii. der Durchmesser der Durchgangsöffnung (3) in den Befestigungsabschnitten (5a, 5b, 5c, 5d) kleiner ist als der Durchmesser der Durchgangsöffnung (3) in den Positionierabschnitten (7a, 7b, 7c),
viii. die axiale Ausdehnung der Befestigungsbereiche (11a, 11b, 11c, 11d), Positionierbereiche (13a, 13b, 13c, 13d), Befestigungsabschnitte (5a, 5b, 5c, 5d) und Positionierabschnitte (7a, 7b, 7c) derart ist, dass es eine erste axiale Position des Bauteils (1) relativ zur Tragwelle (9) gibt, bei der alle Befestigungsabschnitte (5a, 5b, 5c, 5d) des Bauteils (1) vollständig in Positionierbereiche (13a, 13b, 13c, 13d) der Tragwelle (9) fallen und alle Positionierabschnitte (7a, 7b, 7c) des Bauteils (1) jeweils einen Befestigungsbereich (11a, 11b, 11c, 11d) der Tragwelle (9) in axialer Richtung überdecken
ix. und wobei die axiale Ausdehnung der Befestigungsbereiche (11a, 11b, 11c, 11d), Positionierbereiche (7a, 7b, 7c), Befestigungsabschnitte (5a, 5b, 5c, 5d) und Positionierabschnitte (7a, 7b, 7c) derart ist, dass es eine zweite axiale Position des Bauteils (1) relativ zur Tragwelle (9) gibt, bei der alle Befestigungsabschnitte (5a, 5b, 5c, 5d) in axialer Richtung zumindest teilweise mit Befestigungsbereichen (11a, 11b, 11c, 11d) überlappen, um das Bauteil (1) auf der Tragwelle (9) zu fixieren;
b. die Tragwelle (9) wird gekühlt und/oder das Bauteil (1) wird erwärmt, so dass die Tragwelle (9) mit ihren Befestigungsbereichen (11a, 11b, 11c, 11d) durch die Durchgangsöffnung (3) hindurch geschoben werden kann;
c. die Tragwelle (9) wird durch die Durchgangsöffnung (3) hindurch geschoben, so dass das Bauteil, die Vorposition einnimmt, in der die Befestigungsabschnitte (5a, 5b, 5c, 5d) in axialer Richtung teilweise mit den Befestigungsbereichen (11a, 11b, 11c, 11d) überlappen;
d. die Tragwelle (9) wird erwärmt und/oder das Bauteil (1) wird abgekühlt, wodurch das Bauteil (1) in der Vorposition lösbar fixiert wird;
e. das Bauteil (1) wird von der Vorposition gelöst und auf die erste axiale Position gebracht;
f. die Winkelposition des Bauteils (1) relativ zur Tragwelle (9) wird eingestellt, während sich das Bauteil (1) an der ersten axialen Position befindet;
g. das Bauteil (1) wird auf die zweite axiale Position aufgepresst.

9. Verfahren zum Zusammenbau eines Moduls für einen Kraftfahrzeugmotor aus mindestens eine Zylinderkopfhaube (17) mit Lageraufnahmen (19) für eine Tragwelle (9) und einem mit der Tragwelle (9) zu verbindenden Bauteil, wobei eine Nockenwelle aus der Tragwelle (9) und dem Bauteil (1) gemäß einem der Verfahren nach Anspruch 7-8 gebaut wird,
**dadurch gekennzeichnet, dass**
die Tragwelle (9) in Schritt b) gleichzeitig durch die Lageraufnahmen (19) der Zylinderkopfhaube (17) geschoben wird.

## Claims

1. Camshaft comprising a support shaft (9) and a component (1) with a passage opening (3) for receiving the support shaft, wherein
a. the support shaft (9) comprises a plurality of fastening regions (11a, 11b, 11c, 11d) and positioning regions (13a, 13b, 13c, 13d) alternately arranged axially,
b. the passage opening (3) of the component (1) (1) comprises a plurality of axially spaced fastening sections (5a, 5b, 5c, 5d),
c. between two axially adjacent fastening sections (5a, 5b, 5c, 5d) a positioning section (7a, 7b, 7c) is arranged in each case,
d. the diameter of the support shaft (9) in the positioning regions (13a, 13b, 13c, 13d) is smaller than the diameter of the passage opening (3) in the fastening sections (5a, 5b, 5c, 5d),
e. the diameter of the support shaft (9) in the fastening regions (11a, 11b, 11c, 11d) is smaller than the diameter of the passage opening (3) in the positioning sections (7a, 7b, 7c),
f. the diameter of the support shaft (9) in the fastening regions (11a, 11b, 11c, 11d) is greater than the diameter of the support shaft (9) in the positioning regions (13a, 13b, 13c, 13d),
g. the diameter of the passage opening (3) in the fastening sections (5a, 5b, 5c, 5d) is smaller than the diameter of the passage opening (3) in the positioning sections (7a, 7b, 7c),
h. and wherein the axial extent of the fastening regions (11a, 11b, 11c, 11d), positioning regions (13a, 13b, 13c, 13d), fastening sections (5a, 5b, 5c, 5d) and positioning sections (7a, 7b, 7c) is such that there is a first axial position of the component (1) relative to the support shaft (9), in which all fastening sections (5a, 5b, 5c, 5d) of the component (1) fall completely within positioning regions (13a, 13b, 13c, 13d) of the support shaft (9) and all positioning sections (7a, 7b, 7c) of the component (1) in each case overlap a fastening region (11a, 11b, 11c, 11d) of the support shaft (9) in axial direction, **characterized in that** all fastening regions (11a, 11b, 11c, 11d) have a first axial extent (23), all positioning regions (13a, 13b, 13c, 13d) have a second axial extent (25), all fastening sections (5a, 5b, 5c, 5d) have a third axial extent (27), all positioning sections (7a, 7b, 7c) have a fourth axial extent (29) and **in that** the first axial extent (25) is smaller than the fourth axial extent (29) and the the third axial extent (27) is smaller than the second axial extent (25).

2. Camshaft according to Claim 1, **characterized in that** the axial extent of the fastening regions (11a, 11b, 11c, 11d), positioning regions (13a, 13b, 13c, 13d), fastening sections (5a, 5b, 5c, 5d) and positioning sections (7a, 7b, 7c) is such that there is a second axial position of the component (1) relative to the support shaft (9), in which the fastening sections (5a, 5b, 5c, 5d) in axial direction at least partly overlap fastening regions (11a, 11b, 11c, 11d) in order to fix the component (1) on the support shaft (9).

3. Camshaft according to any one of the Claims 1-2, **characterized in that** all fastening regions (11a, 11b, 11c, 11d) have the same axial extent and all positioning regions (13a, 13b, 13c, 13d) have the same axial extent.

4. Camshaft according to any one of the Claims 1-3, **characterized in that** all fastening sections (5a, 5b, 5c, 5d) have the same axial extent and all positioning sections (7a, 7b, 7c) have the same axial extent.

5. Camshaft according to any one of the Claims 1-4, **characterized in that** all positioning regions (13a, 13b, 13c, 13d), fastening regions (11a, 11b, 11c, 11d), positioning sections (7a, 7b, 7c), fastening sections (5a, 5b, 5c, 5d) each have the same axial extent and the sum of the axial extent of a positioning region (13a, 13b, 13c, 13d) and of a fastening region (11a, 11b, 11c, 11d) is equal to the sum of the axial extent of a positioning section (7a, 7b, 7c) and of a fastening section (5a, 5b, 5c, 5d).

6. Camshaft according to any one of the Claims 1-5, **characterized in that** the positioning regions (13a, 13b, 13c, 13d) comprise introduction chamfers (15).

7. Method for assembling a camshaft from a support shaft (9) and a component to be connected, wherein the component (1) comprises a passage opening (3) for receiving the support shaft (9), **characterized by** the following method steps:
a. a support shaft (9) and a component (1) are made available, wherein
i. the support shaft (9) comprises a plurality of fastening regions (11a, 11b, 11c, 11d) and positioning regions (13a, 13b, 13c, 13d) alternately arranged axially,
ii. the passage opening (3) of the component (1) (1) comprises a plurality of axially spaced fastening sections (5a, 5b, 5c, 5d),
iii. between two axially adjacent fastening sections (5a, 5b, 5c, 5d) a positioning section (7a, 7b, 7c) is arranged in each case,
iv. the diameter of the support shaft (9) in the positioning regions (13a, 13b, 13c, 13d) is smaller than the diameter of the passage opening (3) in the fastening sections (5a, 5b, 5c, 5d),
v. the diameter of the support shaft (9) in the fastening regions (11a, 11b, 11c, 11d) is smaller than the diameter of the passage opening (3) in the positioning sections (7a, 7b, 7c),
vi. the diameter of the support shaft (9) in the fastening regions (11a, 11b, 11c, 11d) is greater than the diameter of the support shaft (9) in the positioning regions (13a, 13b, 13c, 13d),
vii. the diameter of the passage opening (3) in the fastening sections (5a, 5b, 5c, 5d) is smaller than the diameter of the passage opening (3) in the positioning sections (7a, 7b, 7c),
viii. the axial extent of the fastening regions (11a, 11b, 11c, 11d), positioning regions (13a, 13b, 13c, 13d), fastening sections (5a, 5b, 5c, 5d) and positioning sections (7a, 7b, 7c) is such that there is a first axial position of the component (1) relative to the support shaft (9), in which all fastening sections (5a, 5b, 5c, 5d) of the component (1) fall completely within positioning regions (13a, 13b, 13c, 13d) of the support shaft (9) and all positioning sections (7a, 7b, 7c) of the component (1) in each case overlap a fastening region (11a, 11b, 11c, 11d) of the support shaft (9) in axial direction ix. and wherein the axial extent of the fastening regions (11a, 11b, 11c, 11d), positioning regions (7a, 7b, 7c), fastening sections (5a, 5b, 5c, 5d) and positioning sections (7a, 7b, 7c) is such that there is a second axial position of the component (1) relative to the support shaft (9), in which all fastening sections (5a, 5b, 5c, 5d) in axial direction overlap at least partly with fastening regions (11a, 11b, 11c, 11d) in order to fix the component (1) on the support shaft (9) ;
b. the support shaft (9) is cooled and/or the component (1) is heated so that the support shaft (9) with its fastening regions (11a, 11b, 11c, 11d) can be pushed through the passage opening (3);
c. the support shaft (9) is pushed through the passage opening (3) so that the component assumes the first axial position;
d. the support shaft (9) is heated and/or the component (1) is cooled;
e. the angular position of the component (1) relative to the support shaft (9) is adjusted while the component (1) is located in the first axial position;
f. the component (1) is pressed on into the second axial position.

8. Method for assembling a camshaft from a support shaft (9) and a component to be connected, wherein the component (1) comprises a passage opening (3) for receiving the support shaft (9), **characterized by** the following method steps:
a. a support shaft (9) and a component (1) are made available
i. the support shaft (9) comprises a plurality of fastening regions (11a, 11b, 11c, 11d) and positioning regions (13a, 13b, 13c, 13d) alternately arranged axially,
ii. the passage opening (3) of the component (1) (1) comprises a plurality of axially spaced fastening sections (5a, 5b, 5c, 5d),
iii. between two axially adjacent fastening sections (5a, 5b, 5c, 5d) a positioning section (7a, 7b, 7c) is arranged in each case,
iv. the diameter of the support shaft (9) in the positioning regions (13a, 13b, 13c, 13d) is smaller than the diameter of the passage opening (3) in the fastening sections (5a, 5b, 5c, 5d),
v. the diameter of the support shaft (9) in the fastening regions (11a, 11b, 11c, 11d) is smaller than the diameter of the passage opening (3) in the positioning sections (7a, 7b, 7c),
vi. the diameter of the support shaft (9) in the fastening regions (11a, 11b, 11c, 11d) is greater than the diameter of the support shaft (9) in the positioning regions (13a, 13b, 13c, 13d),
vii. the diameter of the passage opening (3) in the fastening sections (5a, 5b, 5c, 5d) is smaller than the diameter of the passage opening (3) in the positioning sections (7a, 7b, 7c),
viii. the axial extent of the fastening regions (11a, 11b, 11c, 11d), positioning regions (13a, 13b, 13c, 13d), fastening sections (5a, 5b, 5c, 5d) and positioning sections (7a, 7b, 7c) is such that there is a first axial position of the component (1) relative to the support shaft (9), in which all fastening sections (5a, 5b, 5c, 5d) of the component (1) fall completely within positioning regions (13a, 13b, 13c, 13d) of the support shaft (9) and all positioning sections (7a, 7b, 7c) of the component (1) in each case overlap a fastening region (11a, 11b, 11c, 11d) of the support shaft (9) in axial direction
ix. and wherein the axial extent of the fastening regions (11a, 11b, 11c, 11d), positioning regions (7a, 7b, 7c), fastening sections (5a, 5b, 5c, 5d) and positioning sections (7a, 7b, 7c) is such that there is a second axial position of the component (1) relative to the support shaft (9), in which all fastening sections (5a, 5b, 5c, 5d) in axial direction overlap at least partly with fastening regions (11a, 11b, 11c, 11d) in order to fix the component (1) on the support shaft (9) ;
b. the support shaft (9) is cooled and/or the component (1) is heated so that the support shaft (9) with its fastening regions (11a, 11b, 11c, 11d) can be pushed through the passage opening (3);
c. the support shaft (9) is pushed through the passage opening (3) so that the component assumes the preliminary position in which the fastening sections (5a, 5b, 5c, 5d) in axial direction partly overlap the fastening regions (11a, 11b, 11c, 11d);
d. the support shaft (9) is heated and/or the component (1) is cooled, as a result of which the component (1) is detachably fixed in the preliminary position ;
e. the component (1) is detached from the preliminary position and brought into the first axial position;
f. the angular position of the component (1) relative to the support shaft (9) is adjusted while the component (1) is located in the first axial position;
g. the component (1) is pressed on into the second axial position.

9. Method for assembling a module for a motor vehicle engine from at least one cylinder head cover (17) with bearing mounts (19) for a support shaft (9) and a component to be connected with the support shaft (9), wherein a camshaft consisting of the support shaft (9) and the component (1) is built according to one of the methods according to Claim 7-8, **characterized in that** the support shaft (9) in step b) is simultaneously pushed through the bearing mounts (19) of the cylinder head cover (17) .

## Revendications

1. Arbre à cames, comprenant un arbre de support (9) et un composant (1) avec une ouverture de passage (3) pour recevoir l'arbre de support, dans lequel:
a. l'arbre de support (9) présente une pluralité de régions de fixation (11a, 11b, 11c, 11d) et de régions de positionnement (13a, 13b, 13c, 13d) disposées en alternance axialement,
b. l'ouverture de passage (3) du composant (1) (1) présente une pluralité de portions de fixation espacées axialement (5a, 5b, 5c, 5d),
c. entre deux portions de fixation espacées axialement (5a, 5b, 5c, 5d) est à chaque fois disposée une portion de positionnement (7a, 7b, 7c),
d. le diamètre de l'arbre de support (9) dans les régions de positionnement (13a, 13b, 13c, 13d) est inférieur au diamètre de l'ouverture de passage (3) dans les portions de fixation (5a, 5b, 5c, 5d),
e. le diamètre de l'arbre de support (9) dans les régions de fixation (11a, 11b, 11c, 11d) est inférieur au diamètre de l'ouverture de passage (3) dans les portions de positionnement (7a, 7b, 7c),
f. le diamètre de l'arbre de support (9) dans les régions de fixation (11a, 11b, 11c, 11d) est supérieur au diamètre de l'arbre de support (9) dans les régions de positionnement (13a, 13b, 13c, 13d),
g. le diamètre de l'ouverture de passage (3) dans les portions de fixation (5a, 5b, 5c, 5d) est inférieur au diamètre de l'ouverture de passage (3) dans les portions de positionnement (7a, 7b, 7c),
h. et dans lequel l'étendue axiale des régions de fixation (11a, 11b, 11c, 11d), des régions de positionnement (13a, 13b, 13c, 13d), des portions de fixation (5a, 5b, 5c, 5d) et des portions de positionnement (7a, 7b, 7c) est telle que l'on obtienne une première position axiale du composant (1) par rapport à l'arbre de support (9) dans laquelle toutes les portions de fixation (5a, 5b, 5c, 5d) du composant (1) se trouvent complètement dans des régions de positionnement (13a, 13b, 13c, 13d) de l'arbre de support (9) et toutes les portions de positionnement (7a, 7b, 7c) du composant (1) recouvrent à chaque fois une région de fixation (11a, 11b, 11c, 11d) de l'arbre de support (9) dans la direction axiale,
**caractérisé en ce que**
toutes les régions de fixation (11a, 11b, 11c, 11d) présentent une première étendue axiale (23), toutes les régions de positionnement (13a, 13b, 13c, 13d) présentent une deuxième étendue axiale (25),
toutes les portions de fixation (5a, 5b, 5c, 5d) présentent une troisième étendue axiale (27), toutes les portions de positionnement (7a, 7b, 7c) présentent une quatrième étendue axiale (29) et **en ce que** la première étendue axiale (25) est inférieure à la quatrième étendue axiale (29) et la la troisième étendue axiale (27) est inférieure à la deuxième étendue axiale (25).

2. Arbre à cames selon la revendication 1,
**caractérisé en ce que**
l'étendue axiale des régions de fixation (11a, 11b, 11c, 11d), des régions de positionnement (13a, 13b, 13c, 13d), des portions de fixation (5a, 5b, 5c, 5d) et des portions de positionnement (7a, 7b, 7c) est telle que l'on obtienne une deuxième position axiale du composant (1) par rapport à l'arbre de support (9), dans laquelle les portions de fixation (5a, 5b, 5c, 5d), dans la direction axiale, chevauchent au moins en partie les régions de fixation (11a, 11b, 11c, 11d) afin de fixer le composant (1) sur l'arbre de support (9) .

3. Arbre à cames selon l'une quelconque des revendications 1 à 2,
**caractérisé en ce que**
toutes les régions de fixation (11a, 11b, 11c, 11d) présentent la même étendue axiale et toutes les régions de positionnement (13a, 13b, 13c, 13d) présentent la même étendue axiale.

4. Arbre à cames selon l'une quelconque des revendications 1 à 3,
**caractérisé en ce que**
toutes les portions de fixation (5a, 5b, 5c, 5d) présentent la même étendue axiale et toutes les portions de positionnement (7a, 7b, 7c) présentent la même étendue axiale.

5. Arbre à cames selon l'une quelconque des revendications 1 à 4,
**caractérisé en ce que**
toutes les régions de positionnement (13a, 13b, 13c, 13d), les régions de fixation (11a, 11b, 11c, 11d), les portions de positionnement (7a, 7b, 7c), les portions de fixation (5a, 5b, 5c, 5d), présentent à chaque fois la même étendue axiale et la somme de l'étendue axiale d'une région de positionnement (13a, 13b, 13c, 13d) et d'une région de fixation (11a, 11b, 11c, 11d) est égale à la somme de l'étendue axiale d'une portion de positionnement (7a, 7b, 7c) et d'une portion de fixation (5a, 5b, 5c, 5d).

6. Arbre à cames selon l'une quelconque des revendications 1 à 5,
**caractérisé en ce que**
les régions de positionnement (13a, 13b, 13c, 13d) présentent des biseaux d'insertion (15).

7. Procédé d'assemblage d'un arbre à cames à partir d'un arbre de support (9) et d'un composant à assembler, le composant (1) présentant une ouverture de passage (3) pour recevoir l'arbre de support (9), **caractérisé par** les étapes de procédé suivantes :
a. un arbre de support (9) et un composant (1) sont fournis, où
i. l'arbre de support (9) présente une pluralité de régions de fixation (11a, 11b, 11c, 11d) et de régions de positionnement (13a, 13b, 13c, 13d) disposées en alternance axialement,
ii. l'ouverture de passage (3) du composant (1) (1) présente une pluralité de portions de fixation (5a, 5b, 5c, 5d) espacées axialement,
iii. entre deux portions de fixation adjacentes axialement (5a, 5b, 5c, 5d) est à chaque fois disposée une portion de positionnement (7a, 7b, 7c),
iv. le diamètre de l'arbre de support (9) dans les régions de positionnement (13a, 13b, 13c, 13d) est inférieur au diamètre de l'ouverture de passage (3) dans les portions de fixation (5a, 5b, 5c, 5d),
v. le diamètre de l'arbre de support (9) dans les régions de fixation (11a, 11b, 11c, 11d) est inférieur au diamètre de l'ouverture de passage (3) dans les portions de positionnement (7a, 7b, 7c),
vi. le diamètre de l'arbre de support (9) dans les régions de fixation (11a, 11b, 11c, 11d) est supérieur au diamètre de l'arbre de support (9) dans les régions de positionnement (13a, 13b, 13c, 13d),
vii. le diamètre de l'ouverture de passage (3) dans les portions de fixation (5a, 5b, 5c, 5d) est inférieur au diamètre de l'ouverture de passage (3) dans les portions de positionnement (7a, 7b, 7c),
viii. l'étendue axiale des régions de fixation (11a, 11b, 11c, 11d), des régions de positionnement (13a, 13b, 13c, 13d), des portions de fixation (5a, 5b, 5c, 5d) et des portions de positionnement (7a, 7b, 7c) est telle que l'on obtienne une première position axiale du composant (1) par rapport à l'arbre de support (9) dans laquelle toutes les portions de fixation (5a, 5b, 5c, 5d) du composant (1) se trouvent complètement dans des régions de positionnement (13a, 13b, 13c, 13d) de l'arbre de support (9) et toutes les portions de positionnement (7a, 7b, 7c) du composant (1) recouvrent à chaque fois une région de fixation (11a, 11b, 11c, 11d) de l'arbre de support (9) dans la direction axiale,
ix. et où l'étendue axiale des régions de fixation (11a, 11b, 11c, 11d), des régions de positionnement (7a, 7b, 7c), des portions de fixation (5a, 5b, 5c, 5d) et des portions de positionnement (7a, 7b, 7c) est telle que l'on obtienne une deuxième position axiale du composant (1) par rapport à l'arbre de support (9), dans laquelle toutes les portions de fixation (5a, 5b, 5c, 5d), dans la direction axiale, chevauchent au moins en partie les régions de fixation (11a, 11b, 11c, 11d) afin de fixer le composant (1) sur l'arbre de support (9) ;
b. l'arbre de support (9) est refroidi et/ou le composant (1) est chauffé, de telle sorte que l'arbre de support (9) avec ses régions de fixation (11a, 11b, 11c, 11d) puisse être poussé à travers l'ouverture de passage (3) ;
c. l'arbre de support (9) est poussé à travers l'ouverture de passage (3) de telle sorte que le composant adopte la première position axiale ;
d. l'arbre de support (9) est chauffé et/ou le composant (1) est refroidi ;
e. la position angulaire du composant (1) par rapport à l'arbre de support (9) est ajustée pendant que le composant (1) se trouve dans la première position axiale ;
f. le composant (1) est pressé sur la deuxième position axiale.

8. Procédé d'assemblage d'un arbre à cames à partir d'un arbre de support (9) et d'un composant à assembler, le composant (1) présentant une ouverture de passage (3) pour recevoir l'arbre de support (9), **caractérisé par** les étapes de procédé suivantes :
a. un arbre de support (9) et un composant (1) sont fournis,
i. l'arbre de support (9) présente une pluralité de régions de fixation (11a, 11b, 11c, 11d) et de régions de positionnement (13a, 13b, 13c, 13d) disposées en alternance axialement,
ii. l'ouverture de passage (3) du composant (1) (1) présente une pluralité de portions de fixation (5a, 5b, 5c, 5d) espacées axialement,
iii. entre deux portions de fixation adjacentes axialement (5a, 5b, 5c, 5d) est à chaque fois disposée une portion de positionnement (7a, 7b, 7c),
iv. le diamètre de l'arbre de support (9) dans les régions de positionnement (13a, 13b, 13c, 13d) est inférieur au diamètre de l'ouverture de passage (3) dans les portions de fixation (5a, 5b, 5c, 5d),
v. le diamètre de l'arbre de support (9) dans les régions de fixation (11a, 11b, 11c, 11d) est inférieur au diamètre de l'ouverture de passage (3) dans les portions de positionnement (7a, 7b, 7c),
vi. le diamètre de l'arbre de support (9) dans les régions de fixation (11a, 11b, 11c, 11d) est supérieur au diamètre de l'arbre de support (9) dans les régions de positionnement (13a, 13b, 13c, 13d),
vii. le diamètre de l'ouverture de passage (3) dans les portions de fixation (5a, 5b, 5c, 5d) est inférieur au diamètre de l'ouverture de passage (3) dans les portions de positionnement (7a, 7b, 7c),
viii. l'étendue axiale des régions de fixation (11a, 11b, 11c, 11d), des régions de positionnement (13a, 13b, 13c, 13d), des portions de fixation (5a, 5b, 5c, 5d) et des portions de positionnement (7a, 7b, 7c) est telle que l'on obtienne une première position axiale du composant (1) par rapport à l'arbre de support (9) dans laquelle toutes les portions de fixation (5a, 5b, 5c, 5d) du composant (1) se trouvent complètement dans des régions de positionnement (13a, 13b, 13c, 13d) de l'arbre de support (9) et toutes les portions de positionnement (7a, 7b, 7c) du composant (1) recouvrent à chaque fois une région de fixation (11a, 11b, 11c, 11d) de l'arbre de support (9) dans la direction axiale,
ix. et où l'étendue axiale des régions de fixation (11a, 11b, 11c, 11d), des régions de positionnement (7a, 7b, 7c), des portions de fixation (5a, 5b, 5c, 5d) et des portions de positionnement (7a, 7b, 7c) est telle que l'on obtienne une deuxième position axiale du composant (1) par rapport à l'arbre de support (9), dans laquelle toutes les portions de fixation (5a, 5b, 5c, 5d), dans la direction axiale, chevauchent au moins en partie les régions de fixation (11a, 11b, 11c, 11d) afin de fixer le composant (1) sur l'arbre de support (9) ;
b. l'arbre de support (9) est refroidi et/ou le composant (1) est chauffé, de telle sorte que l'arbre de support (9) avec ses régions de fixation (11a, 11b, 11c, 11d) puisse être poussé à travers l'ouverture de passage (3) ;
c. l'arbre de support (9) est poussé à travers l'ouverture de passage (3) de telle sorte que le composant qui adopte la position préliminaire dans laquelle les portions de fixation (5a, 5b, 5c, 5d), dans la direction axiale, chevauchent en partie les régions de fixation (11a, 11b, 11c, 11d) ;
d. l'arbre de support (9) est chauffé et/ou le composant (1) est refroidi, de sorte que le composant (1) soit fixé de manière desserrable dans la position préliminaire ;
e. le composant (1) est desserré de la position préliminaire et est amené dans la première position axiale ;
f. la position angulaire du composant (1) par rapport à l'arbre de support (9) est ajustée tandis que le composant (1) se trouve dans la première position axiale ;
g. le composant (1) est pressé sur la deuxième position axiale.

9. Procédé pour l'assemblage d'un module pour un moteur de véhicule automobile à partir d'une coiffe de culasse (17) avec des logements de palier (19) pour un arbre de support (9) et un composant à assembler à l'arbre de support (9), un arbre à cames étant réalisé à partir de l'arbre de support (9) et du composant (1) selon l'un des procédés selon les revendications 7 et 8,
**caractérisé en ce que**
l'arbre de support (9), à l'étape b), est poussé simultanément à travers les logements de palier (19) de la coiffe de culasse (17).
